# EUROPEAN PATENT SPECIFICATION

(11) **EP 1 537 782 B1**
(45) Date of publication and mention of the grant of the patent: **17.01.2007**
(21) Application number: 04257217.2
(22) Date of filing: 20.11.2004
(51) Int. Cl.: A01N 35/02, A01N 43/80, A01N 25/22, A01N 25/18, A01N 25/02

(54) **Formaldehyde releaser and process for treating aqueous systems**
Formaldehyd-freisetzende Zusammensetzung zur Behandlung von wässrigen Systemen
Composition libérant du formaldéhyde pour traiter des systèmes aqueux

(30) Priority: 02.12.2003 US 526229 P
(43) Date of publication of application: 08.06.2005
(73) Proprietor: ROHM AND HAAS COMPANY, Philadelphia, Pennsylvania 19106-2399 (US)
(72) Inventor: Felder, Patrick Thomas, Grabs 9472 (CH); Tiedtke, Gerhard, Gams 9473 (CH)
(74) Representative: Buckley, Guy Julian

(56) References cited:
- EP-A- 1 402 778
- US-A- 3 970 625
- US-A- 6 149 822

## Description

The present invention relates to stable compositions that release formaldehyde and a process for treating aqueous systems directly with one or more biocides including the formaldehyde releasing composition. More particularly, the invention is directed to a stable urea formaldehyde composition that, when combined with one or more biocides including isothiazolones, slowly releases low levels of formaldehyde.

Stabilization of biocides including isothiazolones against thermal degradation and storage degradation often involves combining them with metal salts and formaldehdye. Unfortunately, significant amounts of free formaldehyde and other odorous, volatile organic compounds (VOC) are released as a result. It is therefore desirable to provide a stable concentrated formaldehyde releasing composition that is low odor and compatible with one or more biocides, including isothiazolones, and that releases low levels of free formaldehyde and VOC.

U. S. Patent Publication No. 3,970,625 discloses a method for providing a urea-formaldehyde concentrate for use as urea releasing nitrogenous fertilizers. The concentrate is prepared in two steps by combining a buffered solution of aqueous formaldehyde and formic acid with urea in aqueous ammonia such that the resulting mixture contains a molar ratio of 4.4 to 7.3 moles of formaldehyde for each mole of urea. The pH of the mixture is adjusted to between 8.8 and 9.5, the mixture is heated and water is removed by distillation under reduced pressure to provide the concentrate. However, the urea formaldehyde polymer product is odorous and contains high amounts of free formaldehyde in addition to other VOC.

Inventors have discovered a one step process for preparing a stable liquid urea-formaldehyde concentrate that is low cost and is compatible with a wide variety of biocides, including isothiazolones. The concentrate is a clear solution with low odor and a high proportion of bound formaldehyde that provides low levels of free formaldehyde. In addition, the formaldehyde releaser concentrate alone exhibits biocidal activity and in combination with one or more biocides, synergistic biocidal activity is observed. Inventors have also discovered a process for treating aqueous systems with the formaldehyde releaser alone and in combination with one or more biocides, including isothiazolones.

Accordingly, the invention provides a formaldehyde releasing composition comprising urea, formaldehyde and paraformaldehyde in a urea:formaldehyde molar ratio of 1:3; wherein the composition is a colorless clear liquid having a density less than 1.3 g/mL, less than 40 % by weight of VOC and free formaldehyde level of less than 3% by weight based on the weight of the composition.

The invention also provides a biocide composition comprising one or more isothiazolones and a formaldehyde releasing composition comprising urea, formaldehyde and paraformaldehyde in a urea: formaldehyde molar ratio of 1:3, wherein the composition has a density less than 1.3 g/mL, less than 40 % by weight of VOC and a free formaldehyde level of less than 3% by weight based on weight of the composition.

The invention also provides a process for manufacturing a formaldehyde releasing composition comprising the step of mixing aqueous formaldehyde, sodium hydroxide, urea and paraformaldehyde, heating the mixture to 90° C until the solids liquefy, and adjusting the pH from 4 to 5. The process provides a formaldehyde releasing composition that is a colorless clear liquid having a density less than 1.3 g/mL, less than 40 % by weight of VOC and a free formaldehyde level of less than 3% by weight based on weight of the composition.

The invention also provides a method of treating aqueous systems comprising the step of adding one or more isothiazolones in combination with a formaldehyde releasing composition comprising urea, formaldehyde and paraformaldehyde in a urea:formaldehyde molar ratio of 1:3, wherein the composition has a density less than 1.3 g/mL, less than 40 % by weight of VOC and a free formaldehyde level of less than 3% by weight based on weight of the composition.

As used herein, the term aqueous system refers to any system including water. The term VOC refers to volatile organic compounds. The term volatile refers to organic compounds having a vapor pressure of 100°C or less at atmospheric pressure. Many volatile organic compounds can be detected from the odor they emit as a result of their vapor pressure.

The formaldehyde releasing (FR) composition comprises a mixture of urea, formaldehyde and paraformaldehyde in a urea : formaldehyde molar ratio of 1:3. Typically, the FR composition is a clear, colorless liquid. The FR composition has a density less than 1.3 g/mL, less than 40 % by weight of VOC and a free formaldehyde level of less than 3% by weight, based on the weight of the composition. The FR concentrate is low odour, consistent with having a high proportion of bound formaldehyde present. The FR composition provides effective release of formaldehyde in an aqueous system alone and in combination with one or more biocides, including isothiazolones. In addition, the FR concentrate is effective at controlling the growth of microorganisms alone and in combination with one or more biocides, including isothiazolones.

Suitable examples of biocides that are usefully employed in accordance with the present invention include isothiazolones as described in U. S. Pat. Nos. 3,523,121; 3,761,488; 4,954,338; 5,108,500; 5,200,188; 5,292,763; 5,444,078; 5,468,759; 5,591,706; 5,759,786; 5,955,486 and European Pat. Nos. EP 0 302 701; EP 0 490 565; EP 0 431 752; EP 0 608 911; EP 0 608 912; EP 0 608 913; EP 0 611 522 and EP 0 648 414.

According to one embodiment of the invention, isothiazolones useful in the invention are 2-methyl-3-isothiazolone, 5-chloro-2-methyl-3-isothiazolone 2-octyl-3-isothiazolone, 4,5-dichloro-2-cyclohexyl-3-isothiazolone, 4,5-dichloro-2-octyl-3-isothiazolone and combinations thereof.

Other suitable examples of biocidal active ingredients include benzisothiazolone, dibromonitriloproprionamide (DBNPA), 2-(thiocyanomethylthio)benzthiazole (TCMTB), iodopropargylbutylcarbamate (IPBC) and parabens.

It is well known in the art that the performance of microbiocides is frequently enhanced by combining with one or more other microbiocides. In fact, there have been numerous examples of synergistic combinations of biocides. We have found that other known microbiocides are combined advantageously with the formaldehyde releasing composition of the invention to treat aqueous systems.

The FR composition is compatible with isothiazolones and acts as a stabilizer for many isothiazolones. When it is desired to package the isothiazolone with the FR (e.g. in can), the amount of FR employed will be from about 1 percent to about 25 percent. The isothiazolone may be present in a bulk form or packaged or encapsulated in some manner, including a form for controlled release. The ratio of FR to isothiazolone is preferably from about 1.5:1 to 1:7.

Solvents are optionally used to dissolve the isothiazolones and the solvent includes any organic solvent which dissolves the isothiazolones, are compatible with the proposed end use, do not destabilize the isothiazolone and do not react with the isothiazalone or FR. Suitable solvents include, but are not limited to, hydroxylic solvents such as, for example, polyols, such as ethylene glycol, polyethylene glycols, alcohols, ethers, polyethers and combinations thereof. The solvents are also usefully employed in preparing FR compositions according to a separate embodiment.

According to a separate embodiment, small amounts of solvents may be used in admixture to assist in forming a stable microemulsion. Typical examples of solvents include alcohols such as, for example, methanol, ethanol and ethylene glycol, mixtures of water and alcohols, ethers, polyethers and combinations thereof. Hydroxylic solvents, for example, polyols, such as glycols, monoethers of glycols, alcohols, and the like, may be used. A hydroxylic coalescent, such as for example trimethyl-1,3-pentanediol monoisobutyrate also may be used. In certain formulations, hydrocarbons, either aliphatic or aromatic, are useful solvents. Typical solvents also include dipropylene glycol, dipropylene glycol monoethyl ether, xylene, and mineral spirits.

In a yet another separate embodiment, small amounts of one or more nonpolar, water immiscible solvent selected from the group consisting of benzyl alcohol, benzyl acetate, pine oil, phenethyl alcohol, xylene, phenoxyethanol, butyl phthalate, 2,2,4-trimethyl-1,3-pentanediol monoisobutyrate, and alkylbenzene, said solvent being capable of dissolving at least 5% by weight of biocides at room temperature, is used to dissolve the biocidal active ingredient(s) or assist in formation of a stable microemulsion.

Because isothiazolone biocides are so active, the low level required to achieve stabilization also makes them ideal in combination with the FR composition when compared to many known biocides because at the low levels required they are not likely to interfere with other components in systems requiring protection or with systems upon which the protected systems will be applied.

Microbiocide (including isothiazolones) formaldehyde releaser combinations of the invention are useful in many areas of preservation including disinfectants, sanitizers, cleaners, deodorizers, liquid and powder soaps, hide removers, oil and grease removers, food processing chemicals, dairy chemicals, food preservatives, animal food preservatives, wood preservation, polymer latices, paint, lazures, stains, mildewicides, hospital and medical antiseptics, medical devices, metal working fluids, cooling water, air washers, petroleum production, paper treatment, pulp and paper slurries, paper mill slimicides, petroleum products, adhesives, textiles, pigment slurries, latexes, leather and hide treatment, petroleum fuel, jet fuel, laundry sanitizers, agricultural formulations, inks, mining, non-woven fabrics, petroleum storage, rubber, sugar processing, tobacco, swimming pools, photographic rinses, cosmetics, toiletries, pharmaceuticals, chemical toilets, household laundry products, diesel fuel additives, waxes and polishes, oil field applications, and many other applications where water and organic materials come in contact under conditions which allow the growth of undesired microorganisms. Other active ingredients are useful as fungicides, miticides, herbicides, insecticides, and plant growth regulators.

Typical aqueous systems treated by the process of the invention include, for example, recirculating cooling units, open recirculating cooling units that utilize evaporation as a source of cooling, closed loop cooling units, heat exchanger units, reactors, equipment used for storing and handling liquids, boilers and related steam generating units, radiators, flash evaporating units, refrigeration units, reverse osmosis equipment, gas scrubbing units, blast furnaces, paper and pulp processing equipment, sugar evaporating units, steam power plants, geothermal units, nuclear cooling units, water treatment units, food and beverage processing equipment, pool recirculating units, mining circuits, closed loop heating units, machining fluids used in operations such as for example drilling, boring, milling, reaming, drawing, broaching, turning, cutting, sewing, grinding, thread cutting, shaping, spinning and rolling, hydraulic fluids, cooling fluids, oil production units and drilling fluids.

Some embodiments of the invention are described in detail in the following Examples. All ratios, parts and percentages are expressed by weight unless otherwise specified, and all reagents used are of good commercial quality unless otherwise specified.

### Example 1 (One Pot Preparation of Formaldehyde Releasing Composition)

To a two liter 4-necked round bottom flask equipped with a mechanical stirrer, condenser, thermometer and pH meter were added 344 g (34.4%) of aqueous formaldehyde solution (37% wt./wt.) The solution was stirred and 8.5 g (0.9%) of 50 % by weight aqueous solution of NaOH was added to raise the pH togreater than to 10.5. Urea solids (241.4 g, 29.1 %) were added to the basic mixture with stirring, as were 351.3 g (35.1%) of paraformaldehyde resin as beads (90%). The dense mixture of solids and liquids was heated to 90° C with stirring and this temperature was maintained for 1 hour. The solids liquefied and the reaction went from hazy to clear in appearance. The pH of the reaction was adjusted to from 4 to 5 using a 32 % by weight aqueous solution of hydrochloric acid (4.8 g, 0.5%) and the reaction was heated for an additional hour. The solution was cooled to afford a product (FR 2) having the following properties as summarized in Table 1.

**Table 1. Formaldehyde releasing (FR) compositions.**

| **Analyses** | **FR 1** | **FR 2** |
|---|---|---|
| Appearance | colourless, clear liquid (slightly turbid) | colourless, clear liquid |
| Density 20°C | 1.2537 g/ml | 1.2541 g/ml |
| Refraction index n20/D | 1.4472 | 1.4474 |
| Viscosity 10°C | 49 mPa.s | 45 mPa.s |
| Viscosity 15°C | 46 mPa.s | 37 mPa.s |
| Viscosity 20°C | 38 mPa.s | 29 mPa.s |
| Viscosity 25°C | 30 mPa.s | 21 mPa.s |
| Viscosity 90°C | 23 mPa.s | 14 mPa.s |
| Gardner | < 1 | < 1 |
| Cloud point | - 10 °C | - 6 °C |
| Flash point open cup | > 100 °C | > 100 °C |
| Low volatile matter | 38.2 % | 37.8 % |
| pH, 10% in water deion. | 4.96 | 7.29 |
| pH, direct | 5.50 | 7.81 |
| Formaldehyde, free (acetyl acetone meth.) | 2.88 % | 2.61 % |
| Formaldehyde, free (hydroxyl amine meth.) | 2.66 % | 2.53 % |
| Formaldehyde, total (iodometr./NaOH) | 24.3 % | 26.1 % |
| Formaldehyde, total (acidic dist./ ac.acetone) | 40.7 % | 40.5 % |

### Example 2 (Combination of FR with CMI/MI)

### Stability Test for 5-Chloro-2-methylisothiazolin-3-one/2- Methylisothiazolin-3-one

The 3:1 mixture of 5-chloro-2-methylisothiazolin-3-one (CMI) /2-methylisothiazolin-3-one (MI) is mixed at 14% by weight total active ingredient (AI) with 49 wt. % FR. The retention of AI is measured after four weeks at 40°C. and after one and two weeks at 70°C. HPLC is used to measure AI. This is compared with a 3:1 mixture of 5-chloro-2-methylisothiazolin-3-one, CMI/2-methylisothiazolin-3-one, MI stabilized with magnesium nitrate (15%).

## Claims

1. A formaldehyde releasing composition comprising urea, formaldehyde and paraformaldehyde in a urea:formaldehyde molar ratio of 1:3, wherein the composition has a density less than 1.3 g/mL, less than 40 % by weight of volatile organic compounds and a free formaldehyde level of less than 3% by weight based on weight of the composition.

2. A biocide composition comprising: one or more isothiazolones and a formaldehyde releasing composition comprising urea, formaldehyde and paraformaldehyde in a urea:formaldehyde molar ratio of 1:3, wherein the composition has a density less than 1.3 g/mL, less than 40 % by weight of volatile organic compounds and a free formaldehyde level of less than 3% by weight based on weight of the composition.

3. The composition according to claim 2, wherein the isothiazolone is selected from the group consisting of 2-methyl-3-isothiazolone, 5-chloro-2-methyl-3-isothiazolone, 2-octyl-3-isothiazolone, 4,5-dichloro-2-cyclohexyl-3-isothiazolone, 4,5-dichloro-2-octyl-3-isothiazolone and combinations thereof.

4. The composition according to claim 4, wherein the formaldehyde releasing composition further comprises a glycol selected from the group consisting of ethylene glycol, polyols, monoethers of glycols, trimethyl-1,3-pentanediol, dipropylene glycol, dipropylene glycol monoethyl ether, and combinations thereof.

5. A process for manufacturing a formaldehyde releasing composition comprising the step of: mixing aqueous formaldehyde, sodium hydroxide, urea and paraformaldehyde, heating the mixture to 90°C until the solids liquefy, and adjusting the pH from 4 to 5, wherein the resulting mixture has a density less than 1.3 g/mL, less than 40 % by weight of volatile organic compounds and a free formaldehyde level of less than 3% by weight, based on weight of the composition.

6. A method of treating aqueous systems comprising the step of adding one or more isothiazolones in combination with the composition of claim 1.

7. The method according to claim 6, wherein the isothiazolones are selected from the group consisting of 2-methyl-3-isothiazolone, 5-chloro-2-methyl-3-isothiazolone, 2-octyl-3-isothiazolone, 4,5-dichloro-2-cyclohexyl-3-isothiazolone, 4,5-dichloro-2-octyl-3-isothiazolone and combinations thereof.

8. The method according to claim 6, wherein the aqueous system is selected from the group consisting of water treatment units, recirculating cooling units, open recirculating cooling units that utilize evaporation as a source of cooling, closed loop cooling units, heat exchanger units, reactors, equipment used for storing and handling liquids, boilers and related steam generating units, radiators, flash evaporating units, refrigeration units, reverse osmosis equipment, gas scrubbing units, blast furnaces, paper and pulp processing equipment, sugar evaporating units, steam power plants, geothermal units, nuclear cooling units, food and beverage processing equipment, pool recirculating units, mining circuits, closed loop heating units, machining fluids, hydraulic fluids, cooling fluids, oil production units and drilling fluids.

9. The method according to claim 6, wherein the aqueous system is treated with a microemulsion comprising one or more isothiazolones and the formaldehyde releasing composition of claim 1.

## Patentansprüche

1. Formaldehydfreisetzungszusammensetzung, umfassend Harnstoff, Formaldehyd und Paraformaldehyd in einem molaren Harnstoff:Formaldehyd-Verhältnis von 1:3, wobei die Zusammensetzung eine Dichte von weniger als 1,3 g/mL, weniger als 40 Gew.-% an flüchtigen organischen Verbindungen und einen Gehalt an freiem Formaldehyd von weniger als 3 Gew.-%, bezogen auf das Gewicht der Zusammensetzung, aufweist.

2. Biozide Zusammensetzung, umfassend ein oder mehrere Isothiazolone und eine Formaldehydfreisetzungszusammensetzung, umfassend Harnstoff, Formaldehyd und Paraformaldehyd in einem molaren Harnstoff:Formaldehyd-Verhältnis von 1:3, wobei die Zusammensetzung eine Dichte von weniger als 1,3 g/mL, weniger als 40 Gew.-% an flüchtigen organischen Verbindungen und einen Gehalt an freiem Formaldehyd von weniger als 3 Gew.-%, bezogen auf das Gewicht der Zusammensetzung, aufweist.

3. Zusammensetzung nach Anspruch 2, wobei das Isothiazolon aus der Gruppe, bestehend aus 2-Methyl-3-isothiazolon, 5-Chlor-2-methyl-3-isothiazolon, 2-Octyl-3-isothiazolon, 4,5-Dichlor-2-cyclohexyl-3-isothiazolon, 4,5-Dichlor-2-octyl-3-isothiazolon und Kombinationen davon, ausgewählt ist.

4. Zusammensetzung nach Anspruch 3, wobei die Formaldehydfreisetzungszusammensetzung weiter ein Glykol, ausgewählt aus der Gruppe, bestehend aus Ethylenglykol, Polyolen, Monoethern von Glykolen, Trimethyl-1,3-pentandiol, Dipropylenglykol, Dipropylenglykolmonoethylether und Kombinationen davon, umfasst.

5. Verfahren zum Herstellen einer Formaldehydfreisetzungszusammensetzung, umfassend den Schritt des Mischens von wässerigem Formaldehyd, Natriumhydroxid, Harnstoff und Paraformaldehyd, des Erwärmens des Gemisches auf 90°C, bis sich die Feststoffe verflüssigen, und des Einstellens des pH von 4 bis 5, wobei das resultierende Gemisch eine Dichte von weniger als 1,3 g/mL, weniger als 40 Gew.-% an flüchtigen organischen Verbindungen und einen Gehalt an freiem Formaldehyd von weniger als 3 Gew.-%, bezogen auf das Gewicht der Zusammensetzung, aufweist.

6. Verfahren zum Behandeln wässeriger Systeme, umfassend den Schritt des Zugebens eines oder mehrerer Isothiazolone in Verbindung mit der Zusammensetzung nach Anspruch 1.

7. Verfahren nach Anspruch 6, wobei die Isothiazolone aus der Gruppe, bestehend aus 2-Methyl-3-isothiazolon, 5-Chlor-2-methyl-3-isothiazolon, 2-Octyl-3-isothiazolon, 4,5-Dichlor-2-cyclohexyl-3-isothiazolon, 4,5-Dichlor-2-octyl-3-isothiazolon und Kombinationen davon, ausgewählt sind.

8. Verfahren nach Anspruch 6, wobei das wässerige System aus der Gruppe, bestehend aus Wasserbehandlungseinheiten, Umlaufkühleinheiten, offenen Umlaufkühleinheiten, die Verdampfung als eine Kühlquelle verwenden, geschlossenen Kreislaufkühleinheiten, Wärmeaustauschereinheiten, Reaktoren, zum Lagern und zur Handhabung von Flüssigkeiten verwendete Ausrüstung, Boiler und verwandte Dampferzeugungseinheiten, Radiatoren, Flash-Verdampfungseinheiten, Kühleinheiten, Umkehrosmoseausrüstung, Gasreinigungseinheiten, Hochöfen, Papier- und Papiermasseverarbeitungsausrüstung, Zuckerverdampfungseinheiten, Dampfkraftwerke, geothermische Einheiten, nukleare Kühleinheiten, Lebensmittel- und Getränkeverarbeitungsausrüstung, Pool-Zirkulationseinheiten, Bergbaukreisläufe, geschlossenen Kreislaufwärmeinheiten, Bearbeitungsflüssigkeiten, hydraulischen Flüssigkeiten, Kühlflüssigkeiten, Ölproduktionseinheiten und Bohrflüssigkeiten, ausgewählt ist.

9. Verfahren nach Anspruch 6, wobei das wässerige System mit einer Mikroemulsion behandelt wird, welche ein oder mehrere Isothiazolone und die Formaldehydfreisetzungszusammensetzung nach Anspruch 1 umfasst.

## Revendications

1. Composition libérant du formaldéhyde, comprenant l'urée, le formaldéhyde et le paraformaldéhyde en un rapport molaire urée:formaldéhyde de 1:3, où la composition a une masse spécifique inférieure à 1,3 g/ml, moins de 40% en poids de composés organiques volatils et un taux en formaldéhyde libre inférieur à 3% en poids, sur base du poids de la composition.

2. Composition biocide comprenant : une ou plusieurs isothiazolones et une composition libérant du formaldéhyde, comprenant l'urée, le formaldéhyde et le paraformaldéhyde en un rapport molaire urée:formaldéhyde de 1:3, où la composition a une masse spécifique inférieure à 1,3 g/ml, moins de 40% en poids de composés organiques volatils et un taux en formaldéhyde libre inférieur à 3% en poids, sur base du poids de la composition.

3. Composition selon la revendication 2, dans laquelle l'isothiazolone est choisie parmi le groupe consistant en la 2-méthyl-3-isothiazolone, la 5-chloro-2-méthyl-3-isothiazolone, la 2-octyl-3-isothiazolone, la 4,5-dichloro-2-cyclohexyl-3-isothiazolone, la 4,5-dichloro-2-octyl-3-isothiazolone et leurs combinaisons.

4. Composition selon la revendication 3, dans laquelle la composition libérant du formaldéhyde comprend en outre, un glycol choisi parmi le groupe consistant en l'éthylèneglycol, les polyols, les monoéthers de glycol, le triméthyl-1,3-pentandediol, le dipropylèneglycol, le monoéthyléther du dipropylène-glycol et leurs combinaisons.

5. Procédé de préparation d'une composition libérant du formaldéhyde, comprenant les étapes de : mélange de formaldéhyde aqueux, d'hydroxyde de sodium, d'urée et de paraformaldéhyde, chauffage du mélange à 90°C jusqu'à ce que les solides se liquéfient, et ajustement du pH de 4 à 5, où le mélange résultant a une densité inférieure à 1,3 g/ml, moins de 40% en poids de composés organiques volatils et un taux en formaldéhyde libre inférieur à 3% en poids, sur base du poids de la composition.

6. Procédé de traitement de système aqueux, comprenant l'étape d'addition d'une ou de plusieurs isothiazolones en combinaison avec la composition de la revendication 1.

7. Procédé selon la revendication 6, dans lequel les isothiazolones sont choisies parmi le groupe consistant en la 2-méthyl-3-isothiazolone, la 5-chloro-2-méthyl-3-isothiazolone, la 2-octyl-3-isothiazolone, la 4,5-dichloro-2-cyclohexyl-3-isothiazolone, la 4,5-dichloro-2-octyl-3-isothiazolone et leurs combinaisons.

8. Procédé selon la revendication 6, dans lequel le système aqueux est choisi parmi le groupe consistant en des unités de traitement d'eau, des unités de refroidissement en circulation, des unités de refroidissement en circulation ouverte, qui utilisent l'évaporation comme source de refroidissement, les unités de refroidissement en boucle fermée, les unités d'échange de chaleur, les réacteurs, les équipements utilisés pour le stockage et la manipulation de liquides, des chaudières et unités apparentées de génération de vapeur, des radiateurs, des unités d'évaporation éclair, des unités de réfrigération, un équipement d'osmose inverse, des unités d'épuration de gaz, des hauts-fourneaux, un équipement de traitement du papier et de pulpe, des unités d'évaporation de sucre, des installations énergétiques à la vapeur, des unités géothermiques, des unités de refroidissement nucléaire, un équipement de traitement d'aliments et de boissons, des unités de recirculation de chantier, des circuits d'exploitation des mines, des unités de chauffage en boucle fermée, des fluides de machinage, des fluides hydrauliques, des unités de production d'huile et des fluides de forage.

9. Procédé selon la revendication 6, dans lequel le système aqueux est traité avec une microémulsion comprenant une ou plusieurs isothiazolones et la composition libérant du formaldéhyde de la revendication 1.
